Europäisches Patentamt

European Patent Office

Office européen des brevets

(19)

(11) **EP 0 477 065 B1**

(12) **FASCICULE DE BREVET EUROPEEN**

(45) Date de publication et mention
de la délivrance du brevet:
**13.03.1996 Bulletin 1996/11**

(51) Int Cl.6: **G02F 1/161**

(21) Numéro de dépôt: **91402398.1**

(22) Date de dépôt: **10.09.1991**

(54) **Procédé d'obtention de vitrages électrochromes, vitrages électrochromes**

Elektrochrome Fenster und Verfahren zu deren Herstellung

Electrochromic windows and methods of producing the same

(84) Etats contractants désignés:
**AT BE CH DE DK ES FR GB IT LI LU NL SE**

(30) Priorité: **14.09.1990 FR 9011419**

(43) Date de publication de la demande:
**25.03.1992 Bulletin 1992/13**

(73) Titulaire: **SAINT-GOBAIN VITRAGE**
**F-92400 Courbevoie (FR)**

(72) Inventeurs:
• **Cornut, Jean-Claude**
**F-33170 Gradignan (FR)**
• **Schoolmann, Doris**
**F-33000 Bordeaux (FR)**
• **Lassegues, Jean-Claude**
**F-33600 Pessac (FR)**
• **Defendini, Francis**
**F-92500 Rueil Malmaison (FR)**
• **Padoy, Christian**
**F-95500 Gonesse (FR)**

(74) Mandataire: **Muller, René et al**
**SAINT-GOBAIN RECHERCHE**
**39, quai Lucien Lefranc-BP 135**
**F-93303 Aubervilliers Cédex (FR)**

(56) Documents cités:
EP-A- 0 066 136          EP-A- 0 338 876
DE-A- 3 208 604          FR-A- 2 524 657

• PATENT ABSTRACTS OF JAPAN vol. 10, no.
152 (P-462)(2208) 3 Juin 1986 & JP-A-61 006 627

## Description

L'invention a pour objet un procédé d'obtention de vitrages à transmission variable du type électrochrome, ainsi que les vitrages électrochromes obtenus par ce procédé.

Les vitrages électrochromes sont des vitrages à structure feuilletée, dont la transmission lumineuse est modifiée par application aux bornes du vitrage d'une différence de potentiel. Cette catégorie de vitrage peut trouver application aussi bien pour l'habitat que pour l'automobile, notamment pour les toits ouvrants, en permettant le contrôle de l'éclairement solaire.

Les vitrages électrochromes sont constitués de deux feuilles de verre supports, recouvertes chacune d'une couche électroconductrice transparente et séparées successivement par une couche d'un matériau électrochrome remplissant la fonction d'électrode, un électrolyte et une couche de contre-électrode pouvant elle aussi être constituée d'un matériau électrochrome. Les couches électroconductrices transparentes possèdent des amenées de courant correspondant aux bornes électriques du système : elles constituent la source d'électrons. Le matériau électrochrome est le siège d'une réaction électrochimique, le faisant passer d'un degré d'oxydation à l'autre par insertion réversible de cations. Ce changement d'état d'oxydation induit un changement de coloration, chacun des états ayant une coloration différente. La couche d'électrolyte permet le transfert des ions. Elle est en effet susceptible de fournir les cations nécessaires à la réaction. Ces espèces chargées sont mises en mouvement par un champ électrique créé en imposant une différence de potentiel entre les deux couches électroconductrices transparentes.

Dans le cas de l'oxyde de tungstène, la réaction est alors la suivante :

$$WO_3 + x\ M^+ + xe- \quad <-> \quad M_xWO_3$$
$$\text{incolore} \qquad\qquad \text{bleu nuit}$$
$$M^+ = H^+,\ Li^+,\ Na^+,\ K^+.$$

La présence d'une contre-électrode permet l'insertion réversible des cations $M^+$ lors de la phase de décoloration de l'oxyde de tungstène.

Après les dépôts successifs des diverses couches, il reste à assembler le premier substrat recouvert d'une couche électroconductrice transparente, du matériau électrochrome électrode et de l'électrolyte avec le deuxième substrat recouvert d'une couche électroconductrice transparente et du matériau jouant le rôle de la contre-électrode.

Comme il est indiqué dans la demande de brevet EP-A-338 876, cette phase d'assemblage consiste à positionner ces deux substrats l'un contre l'autre, puis à chauffer l'ensemble en exerçant une certaine pression à une température suffisamment élevée pour que l'électrolyte, en l'occurence à base de polymère conducteur ionique, devienne adhérant, par exemple selon une pression de $5.10^5$ Pa à $6.10^5$ Pa et à une température de 85°C.

Cette phase terminée, on pose un joint externe à la périphérie du vitrage, de manière à prévenir toute infiltration d'eau dans la couche d'électrolyte.

Les auteurs de l'invention ont toutefois observé que des bulles visibles à l'oeil nu apparaissent peu à peu après la fabrication du vitrage électrochrome, bulles particulièrement visibles en phase de coloration du matériau électrochrome. Celles-ci sont mises en évidence lors de tests de vieillissement consistant à accélérer leur formation par élévation de température. L'invention a donc pour but de remédier à cet inconvénient.

En analysant la nature de ces bulles, les auteurs ont trouvé que leur composition est très proche de celle de l'air de la cellule d'assemblage : ces bulles proviennent donc de façon inattendue de l'air piégé dans le système électrochrome lors de son assemblage. L'air piégé est tout d'abord invisible car sous forme de microbulles, qui, en fonction du temps écoulé et de la température à laquelle est exposé le vitrage, coalescent et deviennent visibles dans toute l'épaisseur de l'électrolyte.

L'invention a tout d'abord pour objet un procédé d'obtention d'un vitrage électrochrome constitué d'un premier substrat recouvert d'une couche électroconductrice transparente et d'une couche de matériau électrochrome ayant fonction d'électrode, et d'un second substrat recouvert lui aussi d'une couche électroconductrice transparente et d'une couche de contre-électrode selon lequel on dépose sur l'un de ces substrats une couche d'électrolyte. Selon l'invention, avant de positionner et d'assembler l'ensemble en chauffant de manière à rendre l'électrolyte collant, on procède à une étape de pré-assemblage consistant en une mise sous vide desdits substrats mis en position d'assemblage et maintenus à distance l'un de l'autre.

Cette étape de pré-assemblage permet ainsi, avant la mise en contact effective des deux substrats, d'évacuer l'air piégé à la surface de la couche d'électrolyte lors de l'assemblage effectif ultérieur. De bons résultats sont obtenus à partir d'un niveau de vide inférieur à 13 Pa, et de préférence 1,3 Pa.

Différentes variantes du procédé selon l'invention se révèlent avantageuses : ainsi, on peut prolonger l'étape de mise sous vide de manière à provoquer un dégazage au moins partiel de l'air qui a pu être dissous dans l'électrolyte. Cette phase de dégazage se révèle encore plus efficace en chauffant l'électrolyte.

On peut procéder à la phase d'assemblage par chauffage pour rendre l'électrolyte collant également sous vide, une fois l'air à la surface de l'électrolyte supprimé et éventuellement le dégazage de l'électrolyte effectué. Ainsi, tous les stades de l'assemblage se font sous vide, minimisant tout risque de piégeage d'air dans le vitrage.

Pour maintenir à distance les deux substrats, lors de l'étape de pré-assemblage, on dispose un espaceur provisoire, constitué d'un cordon thermoplastique, le long de la périphérie d'un des substrats, de manière à laisser entre ceux-ci un espace suffisant pour permettre l'évacuation de l'air compris entre eux lors de leur mise en contact.

Très avantageusement, cet espaceur provisoire est un cordon thermoplastique suffisamment rigide à température ambiante pour pouvoir remplir son rôle de cale entre les deux substrats -par exemple, sa viscosité peut être de l'ordre de 115 degrés Mooney au bout de 8 mn à 40°C telle que mesurée selon le standard ASTM D-1646 - mais fluant à température élevée de manière à ce que, lors de l'assemblage définitif par chauffage, celui-ci comble tout l'espace d'évacuation de l'air entre les deux substrats. Son épaisseur est ainsi ramenée à celle de l'électrolyte.

Apparaît ici un avantage très substantiel de cette forme de réalisation : l'espaceur provisoire ainsi choisi remplit ensuite une deuxième fonction de joint continu définitif entre les deux substrats. Ainsi non seulement il n'est pas nécessaire de le retirer, mais de surcroît, si on le choisit de façon adéquate, il fait office de barrière d'étanchéité protégeant l'électrolyte en renforçant ou même remplaçant le joint externe.

On pourra choisir l'espaceur étanche à la vapeur d'eau, ainsi qu'à l'eau liquide si on lui incorpore un desséchant comme du tamis moléculaire.

L'espaceur sera avantageusement à base de caoutchouc butyl et/ou polyisobutylène, celui-ci permettant d'obtenir un cordon bien calibré.

L'électrolyte préféré est de type polymère conducteur ionique. En effet, ce type d'électrolyte permet d'obtenir un vitrage "tout solide" présentant une couche conductrice continue de mise en oeuvre relativement simple car faisant intervenir des techniques d'assemblage analogues à celles utilisées de longue date dans l'industrie pour la fabrication du vitrage feuilleté. De plus, une telle couche de type polymère présente la caractéristique d'être assez épaisse, évitant ainsi tout problème de discontinuité. Dans le cadre de l'invention, cette épaisseur permet de dégager un espace suffisant pour loger le cordon thermoplastique après qu'il ait flué.

Ce procédé peut également être avantageusement appliqué à la réalisation d'un vitrage électrochrome de sécurité dont un des substrats est constitué par un feuilleté. Dans le cas d'un système comportant au total trois feuilles de verre, on opère avec une feuille de verre centrale plus petite que les deux feuilles de verre externes, et on dispose un premier espaceur entre les deux feuilles de verre externes et éventuellement un second entre les deux feuilles de verre du système électrochrome à proprement dit.

Le second espaceur permet de s'assurer du remplissage total, lors du fluage, de l'espace périphérique laissé libre entre les deux feuilles de verre externes, ainsi qu'entre la feuille externe et la feuille centrale appartenant au système électrochrome.

De manière particulièrement avantageuse, on envisage également dans le cadre de l'invention d'effectuer l'étape de mise sous vide et l'étape d'assemblage consécutivement dans un unique dispositif, évitant toute manipulation du vitrage entre la première et la seconde étape. Ce dispositif a une enceinte présentant deux chambres de pression-dépression délimitées par une membrane flexible, l'une d'entre elles contenant le vitrage prêt à être assemblé.

De préférence, on chauffe l'électrolyte pendant les deux étapes. L'étape de mise sous vide est réalisée par la mise sous vide des deux chambres, tandis que l'étape d'assemblage est réalisée par mise sous pression de la chambre séparée de la chambre contenant le vitrage par la membrane.

Une fois l'assemblage effectué, on envisage une phase de refroidissement du vitrage avant son évacuation de sa chambre de pression-dépression.

L'invention concerne aussi un dispositif à deux chambres pour la mise en oeuvre du procédé d'obtention d'un vitrage électrochrome, tel que défini dans la revendication 15. De tels dispositifs sont connus de DE-A-3 208 604 et EP-A-0 066 136, où chaque chambre est toutefois uniquement connectée soit à un dispositif de dépressurisation, soit à un dispositif de pressurisation.

L'invention a également pour objet un vitrage électrochrome constitué de deux substrats revêtus de couches électroconductrices transparentes séparées par une couche d'un matériau électrochrome ayant fonction d'électrode, un électrolyte et une contre-électrode, tel que le vitrage ne contienne pas d'air emprisonné à l'interface entre la couche d'électrolyte et la contre-électrode. La couche d'électrolyte a, de plus, subi un dégazage avant la mise en contact des substrats lors de l'assemblage. Un tel vitrage est donc exempt de ces microbulles mobiles ayant tendance à coalescer pour former des bulles visibles.

Le vitrage selon l'invention peut comporter en outre un joint continu en matière thermoplastique présent à la périphérie du vitrage entre les deux substrats, suffisamment rigide à température ambiante pour avoir une viscosité en degrés Mooney de l'ordre de 115° au bout de huit minutes à 40°C telle que mesurée selon le standard ASTM D-1646 et fluant à température élevée mais inférieure à la température de dégradation de l'électrolyte.

Ce joint, comme on l'a précisé précédemment lors de la description du procédé, sert de barrière d'étanchéité, plus efficace qu'un joint externe car inséré entre les deux substrats, pour protéger la couche d'électrolyte. On peut de même lui ajouter un agent déshydratant. La préférence va, pour ce joint, au caoutchouc butyl et/ou polyisobutylène facile à calibrer et bien connu dans l'industrie des double-vitrages.

Avantageusement, le vitrage électrochrome selon l'invention pourra être formé de couches électroconductrices transparentes faites d'oxyde d'indium dopé à l'étain, d'un électrolyte fait d'un complexe de polyoxyéthylène et d'acide phosphorique, l'électrode étant un matériau électrochrome tel que l'oxyde de tungstène, la contre-électrode étant également un matériau électrochrome tel que l'oxyde d'iridium. En effet, l'oxyde d'iridium présente l'avantage de se décolorer et recolorer simultanément avec l'oxyde de tungstène selon la réaction :

$$H_x \, Ir \, O_x \quad\quad\quad < - > \quad\quad\quad Ir \, O_y + xH^+ + xe^-$$

$$\text{brun très clair} \quad\quad\quad\quad\quad\quad \text{brun foncé}$$

et renforce donc ainsi le contraste de couleurs présenté par le vitrage.

L'invention concerne également un vitrage électrochrome de sécurité : un des substrats est alors un vitrage feuilleté, constitué de deux feuilles de verre de dimensions différentes assemblées de façon connue par une feuille de polymère par exemple du type polyvinylbutyral. La feuille de verre la plus petite se trouve alors en position centrale dans le système électrochrome, et un joint thermoplastique se trouve entre les deux feuilles externes. Un tel vitrage peut aussi, selon l'invention, présenter un joint thermoplastique supplémentaire entre la feuille de verre centrale et la feuille externe appartenant au système électrochrome. Ces deux joints, pouvant être de types différents, constituent alors une double barrière de protection particulièrement efficace pour l'électrolyte. Le bris d'un système électrochrome de sécurité comme celui-ci est exempt de danger. Le feuilleté comportera avantageusement de plus une couche anti-ultra-violets, pour protéger l'électrolyte de leurs effets éventuellement néfastes.

D'autres détails de caractéristiques avantageuses de l'invention ressortent de la description détaillée de deux exemples de vitrages électrochromes assemblés selon les diverses variantes de procédé de l'invention, faites en référence aux dessins annexés qui représentent :

- figure 1 : un schéma simplifié d'un vitrage électrochrome avant (partie A) et après (partie B) l'assemblage avec un espaceur provisoire,
- figures 2 et 3 : les schémas de différentes positions possibles de l'espaceur,
- figure 4 : le schéma en position d'assemblage avec l'espaceur d'un système électrochrome de sécurité.
- figure 5 : un schéma d'un dispositif d'assemblage d'un vitrage électrochrome.
- figure 6 : le dispositif selon la figure 5 lors de l'assemblage d'un vitrage électrochrome selon la figure 1.

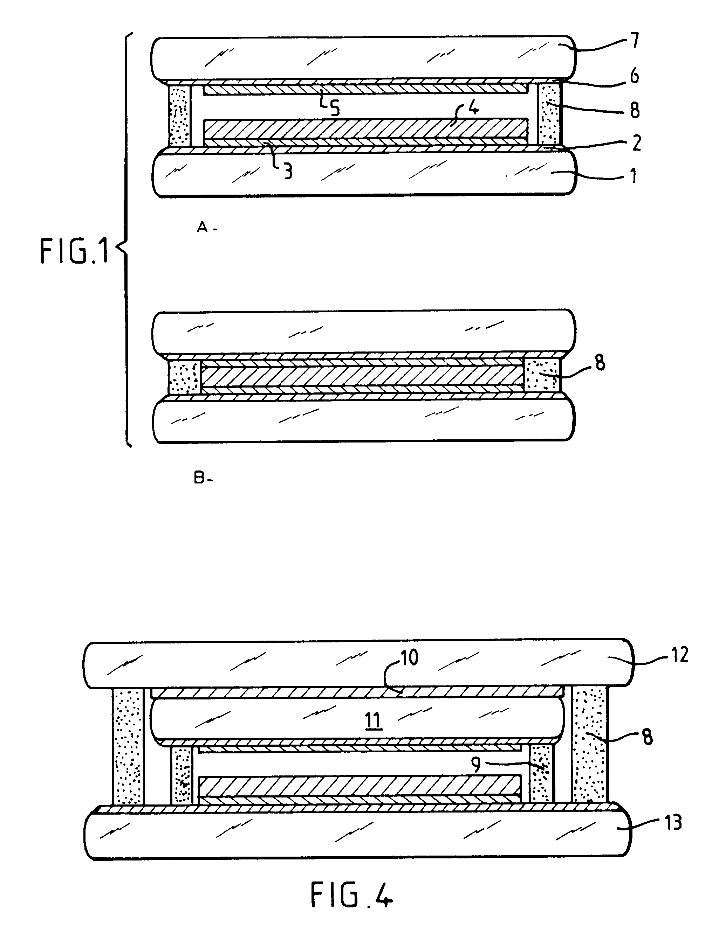

A la figure 1 est donc schématisé le vitrage électrochrome. Par souci de clarté, les rapports d'épaisseur entre les différentes couches du système n'ont pas été respectés et les amenées de courant n'ont pas été représentées. Le vitrage prêt à l'assemblage est constitué d'un premier substrat de verre 1 recouvert de la couche électroconductrice transparente constituée d'oxyde d'indium dopé à l'étain 2, du matériau électrochrome oxyde de tungstène ou d'oxyde d'iridium 3, et de l'électrolyte 4 constitué par une association de polyoxyéthylène et d'acide phosphorique, ainsi que d'un second substrat 7 recouvert d'une même couche électroconductrice transparente 6 et de l'autre matériau électrochrome 5, et un cordon en caoutchouc butyl 8 délimitant un espace entre les deux substrats.

Les caractéristiques de ces différentes couches sont, par exemple, les suivantes :

- substrats : feuilles de verre float de 1,5 mm d'épaisseur, de dimensions 400 mm x 375 mm.
- couches électroconductrices transparentes : couche d'oxyde d'indium dopé à l'étain déposée par pulvérisation cathodique magnétron, épaisseur : 400 nm, résistance carrée inférieure ou égale à 5 ohms.
- couches électrochromes : déposées par pulvérisation cathodique magnétron.

    . oxyde de tungstène : épaisseur 400 nm
    . oxyde d'iridium : épaisseur 55 nm

- électrolyte : solution solide d'acide phosphorique anhydre dans du polyoxyéthylène.

    . Préparation : dans des conditions anhydres, on dissout par litre de solvant de l'acide phosphorique anhydre (21,5 g) et du polyoxyéthylène de masse moléculaire 5 000 000 (densité 1,21 ; température de transition vitreuse -40°C ; rapport O/H du nombre d'atomes d'oxygène du polymère sur le nombre d'atomes d'hydrogène de l'acide égal à 0,66). Le solvant est un mélange 60/40 en volume d'ac-étonitrile et de tétrahydrofurane.
    . La solution est coulée sous atmosphère à taux d'humidité contrôlé (inférieur ou égal à 50 ppm d'eau) par la méthode du tire-film sur le substrat recouvert de l'une ou l'autre des couches de matériau électrochrome. Après évaporation du solvant à température ambiante sous air sec pendant 20 h, on obtient un film de 50 microns dont la conductivité à 20°C est de $9.10^{-5}$ $ohm^{-1}$. $cm^{-1}$ et dont la transmission lumineuse est supérieure à 85 %.

Ce complexe de polyoxyéthylène et d'acide phosphorique présente avantageusement une conductivité électrique à température ambiante tout à fait satisfaisante.

Les deux substrats sont alors prêts à l'assemblage. Au lieu de se contenter de les mettre directement en contact dans un milieu d'air anhydre, on dispose, selon l'invention, un espaceur provisoire 8 sur l'un des deux substrats, comme indiqué en partie A de la figure 1.

- Espaceur provisoire : caoutchouc butyl et/ou polyisobutylène, décrit dans le brevet français n° 1 527 165, de section rectangulaire 3 mm x 4 mm ou cylindrique.

Celui-ci délimite donc une couche d'air, entre l'électrolyte 4 et la couche 5, qui peut circuler vers l'extérieur.

On note que la couche d'électrolyte 4 est disposée sur la couche 3 en laissant environ 10 mm de bord libre de manière à éviter, lors du fluage de l'espaceur, l'apparition de surcouche provoquant des tensions.

L'ensemble est alors mis sous vide, selon une pression d'air inférieure à 13 Pa, pendant une durée de par exemple 1 h 30 ; c'est la phase de pré-assemblage.

La phase d'assemblage par chauffage se fait ensuite, de manière connue, en autoclave à une température inférieure à la température de dégradation du polymère électrolyte. Les conditions sont ici à titre d'exemple les suivantes : température : 95°C, pression : $6.10^5$ Pa, durée : 10-15 mn. Sous l'effet combiné de la chaleur et de la pression, l'espaceur en caoutchouc butyl s'affaisse. La partie B de la figure 1 indique l'assemblage obtenu, et le rôle final du joint 8 que remplit, après son fluage, l'espaceur.

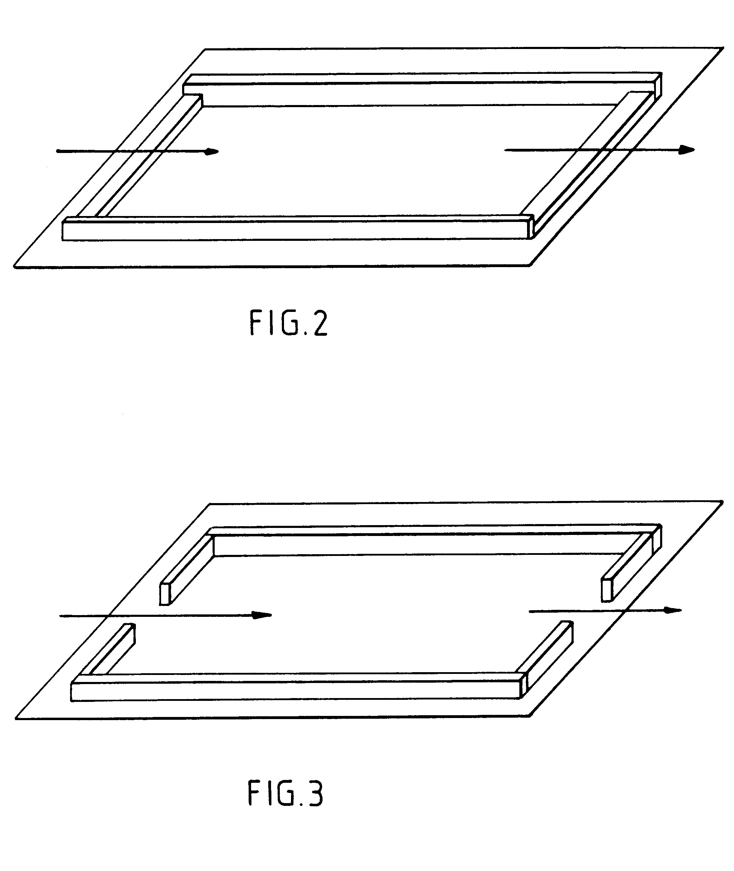

Deux manières de disposer l'espaceur sur l'un des deux substrats sont explicitées aux figures 2 et 3 (avant la phase de pré-assemblage).

Dans la figure 2, on dépose sur le pourtour de l'une ou l'autre des plaques sur deux côtés opposés le cordon en continu tel que la grande section du cordon soit verticale, et sur les deux autres côtés le cordon tel que cette fois la petite section soit verticale.

Dans la figure 3, on dépose sur tous les côtés uniformément sur la même section le cordon, mais en prenant soin de laisser au moins un espace sur chacun des côtés opposés.

Dans les deux cas, on atteint le but recherché de délimiter une couche d'air que l'on peut évacuer par mise sous vide entre les deux substrats.

Selon l'une des variantes du procédé de l'invention, on peut prolonger l'étape de mise sous vide en chauffant à une température inférieure à la température de fluage de l'espaceur en butyl, ici entre 40 et 50°C, pour faciliter le dégazage de l'électrolyte en polymère. Tout en restant sous vide, on chauffe ensuite à la température de fluage de l'espaceur en caoutchouc butyl, soit ici 95°C, pour assembler le tout.

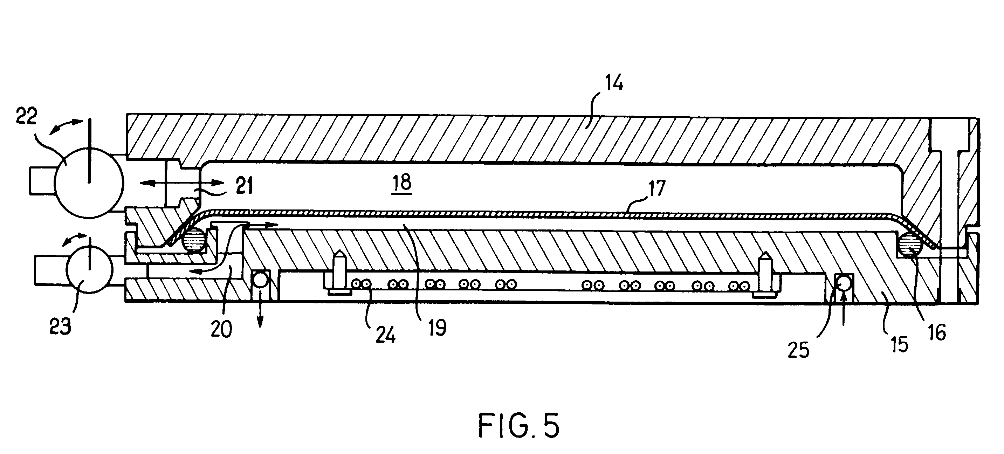

Dans cet ordre d'idée, un dispositif tout particulièrement adapté à l'application du procédé selon l'invention permet d'opérer le pré-assemblage sous vide et la fin de l'assemblage sous l'action de la chaleur de manière consécutive, sans avoir à manipuler le vitrage entre les deux étapes. Un exemple de réalisation d'un tel dispositif est très schématiquement représenté en figure 5.

Celui-ci est constitué de deux disques métalliques 14, 15 en alliage d'aluminium AU 4 G définissant une enceinte de volume interne cylindrique dont l'étanchéité est garantie par la présence d'un joint torique 16. Une membrane 17, en silicone et d'épaisseur comprise entre 1 et 2 mm, est interposée entre les deux disques 14, 15.

Elle permet de séparer le volume de l'enceinte en deux sous-volumes 18, 19, pouvant indépendamment l'un de l'autre être placés en dépression ou au contraire sous pression, chacun des disques étant équipé d'un orifice 20, 21 relié par des tubulures étanches à un système de vannes (dont deux 22, 23 sont indiquées en figure 5) commandant la mise en action de pompes d'aspiration ou de système de pressurisation non représentés.

Le disque inférieur 15 est en outre muni d'un système de chauffage par thermocoax 24, ainsi que d'un système de refroidissement comportant un enroulement de tube de cuivre 25 dans lequel on peut faire circuler de l'eau à température adéquate ou tout autre liquide de refroidissement.

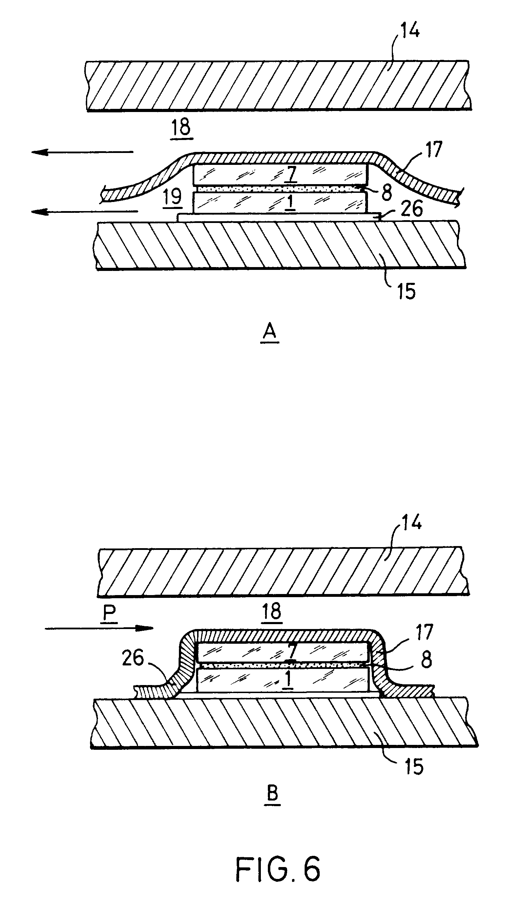

La figure 6 explicite, sans respecter les échelles pour plus de clarté, les deux étapes d'assemblage d'un vitrage électrochrome du type de celui décrit à la figure 1, au moyen du dispositif selon la figure 5. Après avoir ouvert le dispositif, on place sur le disque inférieur 15 une feuille de silicone 26 de 1 mm afin d'éliminer d'éventuelles aspérités, puis on dispose sur celle-ci le substrat 1 recouvert de sa couche électroconductrice 2, du matériau électrochrome 3 et de l'électrolyte 4 (les couches 2, 3, 4 ne sont pas représentées), à la périphérie duquel on dispose, comme précédemment, un cordon de caoutchouc butyl 8 disposé selon l'une ou l'autre des variantes représentées en figure 2 ou 3.

Le deuxième substrat 7 muni lui aussi d'une couche électroconductrice 6, de l'autre matériau électrochrome 5 (non représentés) est disposé sur le premier substrat recouvert 1, la membrane de silicone 17 est mise en place par dessus l'ensemble et le disque supérieur est assujetti au disque inférieur 15 par boulonnage.

On commence alors l'opération de mise sous vide, comme indiqué à la partie A de la figure 6, en mettant simultanément sous vide les deux sous-volumes 18 et 19 par l'intermédiaire des vannes reliées aux orifices 20, 21. Pour rendre l'opération de dégazage plus efficaces, on met en marche le chauffage 24 du disque 15 à une température compatible avec celle de l'électrolyte.

Après un certain temps (de quelques minutes à quelques heures, on procède à l'assemblage à proprement dit du vitrage, comme représenté en partie B de la figure 6 : en maintenant le chauffage, on met sous pression le sous-volume 18 supérieur par l'orifice 21 relié par son système de vannes à une source de gaz comprimé délivrant une pression d'au plus 5 atmosphères (soit environ $5.10^5$ Pa), alors que le sous-volume 19 inférieur contenant le vitrage reste sous vide.

Sous l'effet de la différence de pression entre les deux sous-volumes 18 et 19, le joint 8 déjà ramolli par le chauffage lors de la première étape, s'écrase immédiatement, et les deux substrats s'assemblent, la pression étant transmise par la membrane silicone 17. L'opération terminée, on arrête le chauffage 24 et on met en action le circuit de refroidissement 25. Dès que le métal est revenu à température ambiante, on peut récupérer le vitrage assemblé en démontant le dispositif. On règle le temps de mise sous pression expérimentalement en fonction de la température de chauffage, compte-tenu de la nature de l'électrolyte.

Il est à noter que ce type de dispositif permet d'envisager l'assemblage de substrats bombés, puisque la transmission de la pression s'effectue par une membrane flexible. Il suffit de modifier en conséquence le volume interne du dispositif, notamment en bombant les surfaces des disques inférieur 15 et supérieur 14.

En outre, il s'avère que si les deux substrats 1 et 7 sont de tailles différentes, ou que l'on souhaite les assembler en ménageant un certain décalage entre eux, on peut, afin d'éviter lors de la mise sous pression une situation de porte-à-faux risquant de briser l'un des substrats, prévoir une cale rigide de profil adapté, recouvrant partiellement le substrat supérieur.

De cette manière, on empêche la membrane 17, lors de la mise sous pression, d'appuyer sur le bord libre du substrat supérieur non soutenu par le substrat inférieur.

Les avantages d'un tel dispositif sont immédiats : non seulement on réunit les deux étapes dégazage-assemblage, ce qui représente un gain de temps et de simplicité de mise en oeuvre, mais en plus on s'épargne le transfert délicat du vitrage à assembler, de la zone de dégazage à la zone de chauffage telle que l'autoclave.

La figure 4 décrit un vitrage électrochrome de sécurité, possédant, à la différence du vitrage électrochrome de la figure 1, deux plaques de verre externes 12 et 13, une plaque de verre centrale de dimensions inférieures 11 et une couche de polyvinylbutyral 10. Tout comme à la partie 1 de la figure 1, un espaceur provisoire 8 est disposé entre les plaques 13 et 12. De plus on prévoit éventuellement un espaceur supplémentaire 9 entre les plaques 11 et 13, en laissant des espaces de manière à ce que tout l'air entre les deux feuilles externes puisse être évacué. Le procédé de l'invention est ensuite le même que pour un vitrage électrochrome simple, soit avec deux étapes bien différenciées, soit en une seule opération en utilisant un dispositif d'assemblage du type de celui décrit aux figures 5 et 6.

Les deux espaceurs peuvent être de natures différentes l'un de l'autre, par exemple caoutchouc butyl, polyuréthane, polysulfure, et choisis tels qu'ils fluent tous deux à une température supérieure à la température ambiante, de manière à former une double barrière d'étanchéité.

Les résultats du test de vieillissement comparatif entre le vitrage électrochrome simple assemblé selon le procédé antérieur et le même assemblé selon l'une ou l'autre des variantes du procédé selon l'invention sont indiqués dans le tableau suivant. Il donne, en fonction de la durée d'exposition des vitrages sur une surface de $0,15m^2$ à une température de 100°C, le nombre de bulles apparues.

| durée | assemblage standard | assemblage selon l'invention |
|-------|---------------------|------------------------------|
| 4 h | 36 | 0 |
| 24 h | 150 | 0 |
| 100 h | > 400 | 0 |

On constate ainsi que l'assemblage selon l'invention permet de réduire à néant le nombre de bulles d'air dans le vitrage, et ceci jusqu'à 100 heures d'exposition à haute température, ce qui constitue une amélioration très sensible par rapport aux résultats obtenus lors d'un assemblage standard.

**Revendications**

1. Procédé d'obtention d'un vitrage électrochrome selon lequel on superpose un premier substrat (1) recouvert d'une couche électroconductrice transparente (2) puis d'une couche d'un matériau électrochrome (3) ayant fonction d'électrode, et un second substrat (7) recouvert lui aussi d'une couche électroconductrice transparente (6) et d'une couche de contre-électrode (5), après avoir déposé sur l'un de ces substrats une couche d'électrolyte (4), et on assemble l'ensemble en chauffant de manière à rendre l'électrolyte collant, **caractérisé en ce que** la superposition est précédée d'une étape de mise sous vide desdits substrats mis en position d'assemblage et maintenus à distance l'un de l'autre, de manière à supprimer tout l'air à la surface de la couche d'électrolyte.

**2.** Procédé selon la revendication 1, **caractérisé en ce que** le vide atteint lors de la mise sous vide est inférieur à 13 Pa et de préférence à 1,3 Pa.

**3.** Procédé selon les revendications précédentes, **caractérisé en ce que** l'étape de mise sous vide est prolongée jusqu'au dégazage au moins partiel de l'air dissous dans la couche d'électrolyte.

**4.** Procédé selon la revendication 3, **caractérisé en ce que** l'on chauffe l'électrolyte lors de la phase de dégazage.

**5.** Procédé selon les revendications précédentes, **caractérisé en ce que** la phase d'assemblage par chauffage se fait également sous vide, une fois l'air à la surface de l'électrolyte supprimé et après le dégazage éventuel de l'électrolyte.

**6.** Procédé selon les revendications précédentes, **caractérisé en ce que**, lors de l'étape sous vide, les substrats sont maintenus à distance par un espaceur provisoire (8) constitué d'un cordon thermoplastique disposé sur la périphérie d'un des substrats de manière à laisser entre les deux substrats un espace suffisant pour permettre l'évacuation de l'air compris entre ceux-ci avant leur mise en contact.

**7.** Procédé selon la revendication 6, **caractérisé en ce que** l'espaceur provisoire (8) est constitué d'un matériau thermoplastique comme du caoutchouc butyl et/ou polyisobutylène suffisamment rigide à température ambiante pour avoir une viscosité en degrés Mooney de l'ordre de 115° au bout de 8 min à 40°C telle que mesurée selon le standard ASTM D-1646, et fluant à température élevée mais inférieure à la température de dégradation de l'électrolyte (4), de manière à ramener son épaisseur à celle de l'électrolyte lors de l'opération d'assemblage par chauffage.

**8.** Procédé selon les revendications 1 à 7, **caractérisé en ce que** l'électrolyte (4) est un polymère ionique, de préférence un polymère conducteur protonique comme un complexe de polyoxyéthylène et d'acide phosphorique anhydre.

**9.** Procédé selon l'une des revendications précédentes, **caractérisé en ce que** l'étape d'assemblage du vitrage électrochrome s'effectue par la mise sous pression d'une première chambre de pression-dépression (18) séparée d'une seconde chambre de pression-dépression (19) contenant le vitrage, par pression d'une membrane (17).

**10.** Procédé selon la revendication 9, **caractérisé en ce que** la première chambre de pression-dépression (18) est mise sous vide pendant l'étape de mise sous vide du vitrage.

**11.** Procédé selon la revendication 9 ou 10, **caractérisé en ce que** l'électrolyte est chauffé pendant l'étape de mise sous vide et l'étape d'assemblage.

**12.** Procédé selon la revendication 11, **caractérisé par** une étape de refroidissement du vitrage avant son évacuation de la seconde chambre de pression-dépression (19).

**13.** Procédé d'obtention d'un vitrage électrochrome selon l'une des revendications précédentes, **caractérisé en ce que** l'un des substrats est un feuilleté constitué de deux feuilles de verre de dimensions différentes (11 et 12) assemblées par une feuille de polymère comme le polyvinylbutyral (10), la feuille de verre la plus petite (11) appartenant au système électrochrome **et en ce que** l'on dispose au moins un espaceur provisoire (8) entre les deux feuilles de verre externes (12 et 13).

**14.** Procédé selon la revendication 13, **caractérisé en ce que** l'on dispose un espaceur provisoire supplémentaire (9) entre la feuille de verre centrale (11) et la feuille externe (13) appartenant au système électrochrome.

**15.** Dispositif pour la mise en oeuvre du procédé conforme à l'une des revendications 9 à 14, comportant une enceinte partagée par une membrane mobile (17) délimitant deux chambres de pression-dépression (18,19) **caractérisé en ce que** chacune desdites chambres est connectée par un jeu de vannes à des dispositifs de pressurisation et de dépressurisation, l'une des chambres étant conçue de manière à recevoir le vitrage électrochrome.

**16.** Dispositif selon la revendication 15, **caractérisé en ce que** la chambre de pression-dépression (19) contenant le vitrage à assembler est munie d'un système de chauffage (24).

**17.** Dispositif selon la revendication 15 ou 16, **caractérisé en ce que** la chambre de pression-dépression (19) contenant le vitrage à assembler est munie d'un système de refroidissement (25).

**18.** Dispositif selon l'une des revendications 15 à 17, **caractérisé en ce que** la chambre de pression-dépression (19) contenant le vitrage à assembler est munie d'une cale rigide permettant l'assemblage de vitrages électrochromes dans le cas où les deux substrats en verre (1, 7) sont de tailles différentes ou décalés l'un par rapport à l'autre.

**19.** Dispositif selon l'une des revendications 15 à 18, **caractérisé en ce que** l'enceinte a un volume et une géométrie adaptée à ceux du vitrage électrochrome à assembler.

**20.** Vitrage électrochrome constitué de deux substrats de verre (1 et 7) revêtus de couches électroconductrices transparentes (2 et 6) séparées par une couche d'un matériau électrochrome ayant fonction d'électrode (3), un électrolyte (4) et une contre-électrode (5), **caractérisé en ce que** la couche d'électrolyte (4) a subi un dégazage, de sorte que le vitrage ne contient pas d'air emprisonné à l'interface entre la couche d'électrolyte (4) et la contre-électrode (5).

**21.** Vitrage électrochrome selon la revendication 20, **caractérisé en ce que** l'électrolyte (4) est un polymère conducteur protonique du type complexe de polyoxyéthylène et d'acide phosphorique anhydre.

**22.** Vitrage électrochrome selon l'une des revendications 20 ou 21, **caractérisé en ce qu'**il présente un joint thermoplastique (8) continu à la périphérie du vitrage entre les deux substrats, suffisamment rigide à température ambiante pour avoir une viscosité en degrés Mooney de l'ordre de 115° au bout de 8 min à 40°C telle que mesurée selon le standard ASTM D-1646, et fluant à une température élevée mais inférieure à la température de dégradation de la couche d'électrolyte.

**23.** Vitrage électrochrome selon la revendication 22, **caractérisé en ce que** le joint thermoplastique (8) est à base de caoutchouc butyl et/ou de polyisobutylène.

**24.** Vitrage électrochrome selon l'une des revendications 20 à 23, **caractérisé en ce que** les couches électroconductrices transparentes (2 et 6) sont faites d'oxyde d'iridium dopé à l'étain, l'électrolyte (4) est un conducteur protonique comme le complexe de polyoxyéthylène et d'acide phosphorique anhydre, le matériau électrochrome ayant fonction d'électrode est de l'oxyde de tungstène et la contre-électrode (5) est également un matériau électrochrome comme l'oxyde d'iridium.

**25.** Vitrage électrochrome selon l'une des revendications 20 à 24, **caractérisé en ce que** l'un des substrats est un feuilleté constitué de deux feuilles de verre de dimensions différentes (11 et 12) assemblé par une feuille de polymère comme le polyvinylbutyral (10), la feuille de verre la plus petite (11) appartenant au système électrochrome, un joint thermoplastique (8) se trouvant entre les deux feuilles de verre externes (12 et 13).

**26.** Vitrage électrochrome selon la revendication 25, **caractérisé en ce qu'**un joint thermoplastique supplémentaire (9) se trouve entre la feuille de verre centrale (11), et la feuille de verre externe (13) appartenant au système électrochrome.

**27.** Vitrage électrochrome selon la revendication 25 ou 26, **caractérisé en ce que** le vitrage feuilleté comporte une couche anti-ultraviolets.

**Patentansprüche**

**1.** Verfahren zur Herstellung einer elektrochromen Verglasung, gemäß welchem ein erstes Substrat (1), das mit einer durchsichtigen elektrisch leitfähigen Schicht (2) und darauf mit einer Schicht (3) aus einem elektrochromen Material, welche die Aufgabe einer Elektrode hat, überzogen ist, und ein zweites Substrat (7), das ebenfalls mit einer durchsichtigen elektrisch leitfähigen Schicht (6) und mit einer Gegenelektrodenschicht (5) überzogen ist, nachdem auf einem der Substrate eine Elektrolytschicht (4) aufgebracht worden ist, übereinander angeordnet werden und der Aufbau verbunden wird, indem man ihn derart erwärmt, daß der Elektrolyt klebfähig wird, **dadurch gekennzeichnet, daß** dem Übereinanderanordnen eine Stufe vorausgeht, in welcher man an diese Substrate, die in ihre Verbindungsposition gebracht worden sind und zueinander in einem Abstand gehalten werden, derart ein Vakuum anlegt, daß von der Oberfläche der Elektrolytschicht die gesamte Luft entfernt wird.

2. Verfahren nach Anspruch 1, **dadurch gekennzeichnet, daß** das Vakuum, wenn es angelegt wird, eine Stärke von unter 13 Pa und vorzugsweise 1,3 Pa erreicht.

3. Verfahren nach den vorhergehenden Ansprüchen, **dadurch gekennzeichnet, daß** die Stufe des Anlegens des Vakuums derart verlängert wird, bis die in der Elektrolytschicht gelöste Luft wenigstens teilweise entfernt ist.

4. Verfahren nach Anspruch 3, **dadurch gekennzeichnet, daß** der Elektrolyt während des Entgasungsvorgangs erwärmt wird.

5. Verfahren nach den vorhergehenden Ansprüchen, **dadurch gekennzeichnet, daß** die Stufe des Verbindens durch Erwärmen ebenfalls unter Vakuum erfolgt, wenn die Luft an der Oberfläche des Elektrolyten entfernt und nachdem gegebeneiifalls der Elektrolyt entgast worden ist.

6. Verfahren nach den vorhergehenden Ansprüchen, **dadurch gekennzeichnet, daß** die Substrate in der Vakuum-Stufe in einem Abstand zueinander von einem vorübergehenden Abstandshalter (8) gehalten werden, der aus einer Thermoplastschnur besteht, die am Umfang eines Substrates derart angeordnet ist, daß zwischen den beiden Substraten ein ausreichender Zwischenraum freibleibt, um die Evakuierung der zwischen ihnen eingeschlossenen Luft zu ermöglichen, bevor sie miteinander in Berührung gebracht werden.

7. Verfahren nach Anspruch 6, **dadurch gekennzeichnet, daß** der vorübergehende Abstandshalter (8) aus einem thermoplastischen Material wie Butylkautschuk und/oder Polyisobutylen besteht, das bei Umgebungstemperatur genügend steif ist, um nach 8 min bei 40 °C eine Mooney-Viskosität, gemessen entsprechend dem Standard ASTM D-1646, von etwa 115 ° aufzuweisen, und bei einer höheren Temperatur, die jedoch unterhalb der Zersetzungstemperatur des Elektrolyten (4) liegt, derart fließfähig ist, daß seine Dicke während der Stufe des Verbindens durch Erwärmen auf die des Elektrolyten gebracht wird.

8. Verfahren nach den Ansprüchen 1 bis 7, **dadurch gekennzeichnet, daß** der Elektrolyt (4) ein ionisches Polymer und vorzugsweise ein protonenleitendes Polymer wie ein Komplex aus Polyoxyethylen und wasserfreier Phosphorsäure ist.

9. Verfahren nach einem der vorhergehenden Ansprüche, **dadurch gekennzeichnet, daß** man die Stufe der Verbindung der elektrochromen Verglasung durchführt, indem eine erste Druck-Unterdruck-Kammer (18), die von einer zweiten Druck-Unterdruck-Kammer (19) getrennt ist, welche die Verglasung enthält, durch Pressen auf eine Membran (17) unter Druck gesetzt wird.

10. Verfahren nach Anspruch 9, **dadurch gekennzeichnet, daß** man während der Stufe, in welcher die Verglasung unter ein Vakuum gesetzt wird, an die erste Druck-Unterdruck-Kammer (18) ein Vakuum anlegt.

11. Verfahren nach Anspruch 9 oder 10, **dadurch gekennzeichnet, daß** der Elektrolyt während der Stufe des Vakuum-Anlegens und der des Verbindens erwärmt wird.

12. Verfahren nach Anspruch 11, **dadurch gekennzeichnet, daß** die Verglasung vor ihrer Entnahme aus der zweiten Druck-Unterdruck-Kammer (19) abgekühlt wird.

13. Verfahren zur Herstellung einer elektrochromen Verglasung nach einem der vorhergehenden Ansprüche, **dadurch gekennzeichnet, daß** eines der Substrate eine Verbundglasscheibe ist, welche aus zwei Glasscheiben (11 und 12) mit unterschiedlichen Abmessungen besteht, die durch eine Folie (10) aus einem Polymer wie Polyvinylbutyral verbunden sind, wobei die kleinere Glasscheibe (11) zum elektrochromen System gehört, und daß zwischen den beiden äußeren Glasscheiben (12 und 13) wenigstens ein vorübergehender Abstandshalter (8) angeordnet ist.

14. Verfahren nach Anspruch 13, **dadurch gekennzeichnet, daß** zwischen der zentralen Glasscheibe (11) und der äußeren Glasscheibe (13), die zum elektrochromen System gehört, ein zusätzlicher vorübergehender Abstandshalter (9) angebracht wird.

15. Vorrichtung zur Durchführung des Verfahrens nach einem der Ansprüche 9 bis 14, umfassend einen Behälter, der von einer beweglichen Membran (17) unterteilt wird, die zwei Druck-Unterdruck-Kammern (18, 19) begrenzt, **dadurch gekennzeichnet, daß** jede der Kammern durch einen Satz Ventile mit Druck- und Unterdruckeinrichtungen verbunden und eine dieser Kammern derart konstruiert ist, daß sie die elektrochrome Verglasung aufnehmen kann.

16. Vorrichtung nach Anspruch 15, **dadurch gekennzeichnet, daß** die Druck-Unterdruck-Kammer (19), welche die zu verbindende Verglasung enthält, mit einem Beheizungssystem (24) ausgerüstet ist.

17. Vorrichtung nach Anspruch 15 oder 16, **dadurch gekennzeichnet, daß** die Druck-Unterdruck-Kammer (19), welche die zu verbindende Verglasung enthält, mit einem Kühlsystem (25) ausgerüstet ist.

18. Vorrichtung nach einem der Ansprüche 15 bis 17, **dadurch gekennzeichnet, daß** die Druck-Unterdruck-Kammer (19), welche die zu verbindende Verglasung enthält, mit einer starren Unterlage versehen ist, die das Verbinden der elektrochromen Verglasungen in dem Fall erlaubt, wenn die beiden Glassubstrate (1, 7) unterschiedlich groß oder zueinander versetzt sind.

19. Vorrichtung nach einem der Ansprüche 15 bis 18, **dadurch gekennzeichnet, daß** der Behälter einen Rauminhalt und eine Geometrie besitzt, welche an die der zu verbindenden elektrochromen Verglasung angepaßt sind.

20. Elektrochrome Verglasung, bestehend aus zwei Glassubstraten (1 und 7), die mit durchsichtigen elektrisch leitfähigen Schichten (2 und 6) überzogen und durch eine Schicht (3) aus einem elektrochromen Material, welche die Aufgabe einer Elektrode hat, einen Elektrolyten (4) und eine Gegenelektrode (5) getrennt sind, **dadurch gekennzeichnet, daß** die Elektrolytschicht (4) derart einem Entgasungsvorgang unterworfen worden ist, daß die Verglasung keine in der Grenzfläche zwischen dieser Elektrolytschicht (4) und der Gegenelektrode (5) eingeschlossene Luft enthält.

21. Elektrochrome Verglasung nach Anspruch 20, **dadurch gekennzeichnet, daß** der Elektrolyt (4) ein protonenleitendes Polymer vom Typ eines Komplexes aus Polyoxyethylen und wasserfreier Phosphorsäure ist.

22. Elektrochrome Verglasung nach Anspruch 20 oder 21, **dadurch gekennzeichnet, daß** sie zwischen den beiden Substraten am Umfang der Verglasung eine ununterbrochene thermoplastische Dichtung (8) besitzt, die bei Umgebungstemperatur genügend steif ist, um nach 8 min bei 40 °C eine Mooney-Viskosität, gemessen entsprechend dem Standard ASTM D-1646, von etwa 115° aufzuweisen und welche bei einer höheren Temperatur, die jedoch unterhalb der Zersetzungstemperatur der Elektrolytschicht liegt, fließfähig ist.

23. Elektrochrome Verglasung nach Anspruch 22, **dadurch gekennzeichnet, daß** die thermoplastische Dichtung (8) Butylkautschuk und/oder Polyisobutylen zur Grundlage hat.

24. Elektrochrome Verglasung nach einem der Ansprüche 20 bis 23, **dadurch gekennzeichnet, daß** die durchsichtigen elektrisch leitfähigen Schichten (2 und 6) aus mit Zinn dotiertem Iridiumoxid hergestellt sind, der Elektrolyt (4) ein Protonenleiter wie der Komplex aus Polyoxyethylen und wasserfreier Phosphorsäure ist, das elektrochrome Material, welches die Aufgabe der Elektrode hat, Wolframoxid und die Gegenelektrode (5) ebenfalls ein elektrochromes Material wie Iridiumoxid ist.

25. Elektrochrome Verglasung nach einem der Ansprüche 20 bis 24, **dadurch gekennzeichnet, daß** eines der Substrate eine Verbundglasscheibe ist, welche aus zwei Glasscheiben (11 und 12) mit unterschiedlichen Abmessungen besteht, die durch eine Folie (10) aus einem Polymer wie Polyvinylbutyral verbunden sind, wobei die kleinere Glasscheibe (11) zum elektrochromen System gehört und sich zwischen den beiden äußeren Glasscheiben (12 und 13) eine thermoplastische Dichtung (8) befindet.

26. Elektrochrome Verglasung nach Anspruch 25, **dadurch gekennzeichnet, daß** sich zwischen der zentralen Glasscheibe (11) und der äußeren Glasscheibe (13), die zum elektrochromen System gehört, eine zusätzliche thermoplastische Dichtung (9) befindet.

27. Elektrochrome Verglasung nach Anspruch 25 oder 26, **dadurch gekennzeichnet, daß** die verbundglasscheibe eine Ultraviolettschutzschicht enthält.

**Claims**

1. Process for obtaining an electrochromic glazing, according to which a first substrate (1) covered by a transparent electroconductive layer (2), a layer of an electrochromic material (3) serving as the electrode, and a second substrate (7) covered with a transparent electroconductive layer (6) and a counterelectrode layer (5) are super imposed, after depositing on one of the said substrates an electrolyte layer (4) and assembly takes place by heating in such a way as to make the electrolyte adhesive, characterized in that superimposing is preceded by a stage of vacuumizing the said substrates brought into the assembly position and maintained at a distance from one another, so as to eliminate any air on the surface of the electrolyte layer.

2. Process according to claim 1, characterized in that the vacuum reached during vacuumizing is below 13 Pa and preferably 1.3 Pa.

3. Process according to the preceding claims, characterized in that the vacuumizing stage is extended up to the at least partial degassing of the air dissolved in the electrolyte layer.

4. Process according to claim 3, characterized in that the electrolyte is heated during the degassing stage.

5. Process according to the preceding claims, characterized in that the heating assembly stage also takes place in vacuo, once the air on the surface of the electrolyte has been eliminated and following the possible degassing of the electrolyte.

6. Process according to the preceding claims, characterized in that during the vacuumizing stage, lthe substrates are kept spaced by a provisional spacer (8) constituted by a thermoplastic bead placed on the the periphery of one of the substrates so as to leave between the two substrates an adequate space to permit the evacuation of the air between them and prior to the contacting thereof.

7. Process according to claim 6, characterized in that the provisional spacer (8) is made from a thermoplastic material such as butyl rubber and/or polyisobutylene, which is sufficiently rigid at ambient temperature to have a viscosity of 115° Mooney at the end of 8 min at 40°C, as measured according to ASTM standard D-1646, and which flows at high temperature, but below the decomposition point of the electrolyte (4), so as to restore its thickness to that of the electrolyte during the assembly operation by heating.

8. Process according to claims 1 to 7, characterized in that the electrolyte (4) is an ionic polymer, preferably a protonic conductive polymer such as a complex of polyocyethylene and anhydrous phosphoric acid.

9. Process according to one of the preceding claims, characterized in that the assembly stage of the electrochromic glazing takes place by pressurizing a first pressure - vacuum chamber (18) separated from a second pressure - vacuum chamber (19) containing the glazing by the pressure of a membrane (17).

10. Process according to claim 9, characterized in that the first pressure - vacuum chamber (18) is vacuumized during the glazing vacuumizing stage.

11. Process according to claim 9 or 10, characterized in that the electrolyte is heated during the vacuumizing stage and the assembly stage.

12. Process according to claim 11, characterized by a stage of cooling the glazing prior to its discharge from the second pressurevacuum chamber (19).

13. Process for obtaining an electrochromic glazing according to one of the preceding claims, characterized in that one of the substrates is a laminate constituted by two glass sheets of different dimensions (11 and 12) assembled by a polymer sheet, such as of polyvinyl butyral (19), the smaller glass sheet (11) belonging to the electrochromic system and in that at least one provisional spacer (8) is placed between the two outer glass sheets (12 and 13).

14. Process according to claim 13, characterized in that a supplementary provisional spacer (9) is placed between the central glass sheet (11) and the outer sheet (13) belonging to the electrochromic system.

15. Apparatus for performing the process according to oen of the claims 9 to 14, comprising an enclosure sub-devided by a mobile membrane (17) defining two pressure - vacuum chambers, characterized in that each of said chambers is connected by a set of valves to pressurization - depressurization apparatuses, one of the chambers being designed so as to receive the electrochromic glazing.

16. Apparatus according to claim 15, characterized in that the first pressure - vacuum chamber (19) containing the glazing to be assembled is provided with a heating system (24).

17. Apparatus according to claims 15 or 16, characterized in that the pressure - vacuum chamber (19) containing the glazing to be assembled is provided with a cooling system (25).

18. Apparatus according to one of the claims 15 to 17, characterized in that the pressure - vacuum chamber (19) containing the glazing to be assembled is provided with a rigid shim permitting the assembly of the electrochromic glazings in the case where the two glass substrates (1, 7) are of different sizes or are reciprocally displaced.

19. Apparatus according to one of the claims 15 to 18, characterized in that the enclosure has a volume and a geometry adapted to those of the electrochromic glazing to be assembled.

20. Electrochromic glazing constituted by two glass substrates (1 and 7) coated by transparent electrode conductive layers (2 and 6) separated by a layer of an electrochromic material serving as the electrode (3), an electrolyte (4) and a counterelectrode (5), characterized in that the electrolyte layer (4) has undergone a degassing, so that the glazing contains no air trapped at the interface between the electrolyte layer (4) and the counterelectrode (5).

21. Electrochromic glazing according to claim 20, characterized in that the electrolyte (4) is a protonic conductive polymer of the type constituted by a complex of polyoxyethylene and anhydrous phosphoric acid.

22. Electrochromic glazing according to one of the claims 20 or 21, characterized in that it has a continuous thermoplastic joint (8) at the periphery of the glazing between the two substrates and which is sufficiently rigid at ambient temperature to have a viscosity of approximately 115° Mooney after 8 min at 40°C, as measured according to ASTM standard D-1646, and which flows at a high temperature, but which is below the decomposition point of the electrolyte layer.

23. Electrochromic glazing according to claim 22, characterized in that the thermoplastic joint (8) is b ased on butyl rubber and/or polyisobutylene.

24. Electrochromic glazing according to one of the claims 20 to 23, characterized in that the transparent electroconductive layers (2 and 6) are made from tin-doped iridium oxide, the electrolyte (4) being a proton conductor such as the complex of polyoxyethylene and anhydrous phosphoric acid, the electrochromic material serving as the electrode being tungsten oxide and the counterelectrode (5) is also an electrochromic material such as iridium oxide.

25. Electrochromic glazing according to one of the claims 20 to 24, characterized in that one of the substrates is a laminate constituted by two glass sheets of different sizes (11 and 12) assembled by a polymer sheet such as of polyvinyl butyral (10), the smaller glass sheet (11) belongong to the electrochromic system and a thermoplastic joint (8) being located between the two outer glass sheets (12 and 13).

26. Electrochromic glazing according to claim 25, characterized in that there is a supplementary thermoplastic joint (9) between the central glass sheet (11) and the outer glass sheet (13) belonging to the electrochromic system.

27. Electrochromic glazing according to claims 25 or 26, characterized in that the laminated glazing has an ultraviolet - resistant layer

FIG.1

A.

B.

FIG.4

FIG.2

FIG.3

FIG.5

FIG. 6